# EUROPEAN PATENT SPECIFICATION

(11) **EP 4 498 365 B1**
(45) Date of publication and mention of the grant of the patent: **08.04.2026**
(21) Application number: 22947771.6
(22) Date of filing: 21.12.2022
(51) Int. Cl.: G10L 15/22, G10L 15/08

(54) **CONTROL METHOD AND APPARATUS FOR SPEECH RECOGNITION DEVICE, AND ELECTRONIC DEVICE AND STORAGE MEDIUM**
STEUERUNGSVERFAHREN UND -VORRICHTUNG FÜR SPRACHERKENNUNGSVORRICHTUNG SOWIE ELEKTRONISCHE VORRICHTUNG UND SPEICHERMEDIUM
PROCÉDÉ ET APPAREIL DE COMMANDE POUR DISPOSITIF DE RECONNAISSANCE VOCALE, DISPOSITIF ÉLECTRONIQUE ET SUPPORT DE STOCKAGE

(30) Priority: 21.06.2022 CN 202210708640
(43) Date of publication of application: 29.01.2025
(73) Proprietor: Gree Electric Appliances, Inc. of Zhuhai, Zhuhai, Guangdong 519031 (CN); Zhuhai Leayun Technology Co., Ltd, Zhuhai, Guangdong 519015 (CN)
(72) Inventor: HAO, Xiaobo, Zhuhai, Guangdong 519031 (CN); LI, Shaobin, Zhuhai, Guangdong 519031 (CN); SONG, Dechao, Zhuhai, Guangdong 519031 (CN); TANG, Jie, Zhuhai, Guangdong 519031 (CN); ZHANG, Peng, Zhuhai, Guangdong 519031 (CN)
(74) Representative: V.O.
(86) International application number: PCT/CN2022/140746
(87) International publication number: WO 2023/246036

(56) References cited:
- CN-A- 106 471 518
- CN-A- 111 007 943
- CN-A- 111 145 739
- CN-A- 112 368 674
- CN-A- 112 639 718
- CN-A- 112 863 508
- CN-A- 114 360 527
- CN-A- 115 019 798
- US-A1- 2020 349 966

## Description

### Technical Field

The invention relates to a technical field of artificial intelligence, and particularly relates to a method and apparatus for controlling a speech recognition device, an electronic device, and a storage medium.

### Background

With development of the Internet of Things technology and emergence of various speech devices, personal life experience has been greatly broadened. However, a speech-enabled service device can only start after awakened through a keyword, and then transmit a corresponding instruction to fulfill user requirements. In this way, use complexity is increased, and user experience of using a speech recognition device is degraded.

US 2020/0349966 A1 relates a hot-word free adaptation of one or more function(s) of an automated assistant. Sensor data, from one or more sensor components of an assistant device that provides an auto-mated assistant interface (graphical and/or audible), is processed to determine occurrence and/or confidence metric(s) of various attributes of a user that is proximal to the assistant device. Whether to adapt each of one or more of the function(s) of the automated assistant is based on the occurrence and/or the confidence of one or more of the various attributes. For example, certain processing of at least some of the sensor data can be initiated, such as initiating previously dormant local processing of at least some of the sensor data and/or initiating transmission of at least some of the audio data to remote automated assistant component(s).

### Summary

The invention provides a method and apparatus for controlling a speech recognition device, an electronic device, and a storage medium, so as to solve a problem of a complicated awakening mode of a speech device in the related art.

According to a first aspect, some embodiments of the invention provide a method for controlling a speech recognition device. The method includes: recording, when the speech recognition device is in a dormant state, current time as first time in response to detecting that a target object stares at the speech recognition device; recording the current time as second time in response to detecting that the target object makes a speech; and awakening the speech recognition device in response to determining that an interval between the first time and the second time satisfies a preset condition, such that the speech recognition device enters a speech control mode.

According to a second aspect, the invention provides an apparatus for controlling a speech recognition device. The apparatus includes: a first recording module configured to record, when the speech recognition device is in a dormant state, current time as first time in response to detecting that a target object stares at the speech recognition device; a second recording module configured to record the current time as second time in response to detecting that the target object makes a speech; and a first awakening module configured to awaken the speech recognition device in response to determining that an interval between the first time and the second time satisfies a preset condition, such that the speech recognition device enters a speech control mode.

According to a third aspect, the invention provides an electronic device. The electronic device includes a processor, a communication interface, a memory, and a communication bus. The processor, the communication interface and the memory are in communication with one another through the communication bus.

The memory is configured to store a computer program.

The processor is configured to execute the computer program stored in the memory, so as to implement steps of the method for controlling a speech recognition device according to the first aspect.

According to a fourth aspect, the invention provides a computer-readable storage medium, which stores a computer program. The computer program implements steps of the method for controlling a speech recognition device according to the first aspect when being executed by a processor.

Compared with the related art, the technical solution according to the example of the invention has the following advantages:
According to the method of the examples of the invention, firstly, when the speech recognition device is in the dormant state, the current time is recorded as the first time in response to detecting that the target object stares at the speech recognition device; then, the current time is recorded as the second time in response to detecting that the target object makes the speech; and finally, the speech recognition device is awakened in response to determining that the interval between the first time and the second time satisfies the preset condition, such that the speech recognition device enters the speech control mode. According to the method, the speech recognition device is awakened according to an interval between time when the target object stares at the speech recognition device and time when the speech is made, and the target object does not need to firstly say a wakeup word to awaken the speech recognition device. In this way, complexity of awakening a speech device is reduced, user experience is improved, and further a problem of a complicated awakening mode of the speech device in the related art is solved.

### Brief Description of the Drawings

Accompanying drawings herein are incorporated in the description as a constituent part of the description, illustrate examples conforming to the invention, and serve to describe principles of the invention together with the description.

To more clearly describe technical solutions in examples of the invention or in the related art, the accompanying drawings required for description of the examples or the related art will be briefly introduced below. Obviously, those of ordinary skill in the art also derive other accompanying drawings from these accompanying drawings without making inventive efforts.
Fig. 1 illustrates a schematic flow diagram of a method for controlling a speech recognition device according to an example of the invention;
Fig. 2 illustrates a schematic flow diagram of a method for controlling a speech recognition device according to an example of the invention;
Fig. 3 illustrates a schematic structural diagram of an apparatus for controlling a speech recognition device according to an example of the invention; and
Fig. 4 illustrates a schematic structural diagram of an electronic device according to an example of the invention.

### Detailed Description of the Embodiments

For making objectives, technical solutions and advantages of examples of the invention more obvious, the technical solutions in the examples of the invention will be clearly and completely described below in conjunction with the accompanying drawings in the examples of the invention. Obviously, the described examples are some examples rather than all examples of the invention. On the basis of the examples of the invention, all other examples obtained by those of ordinary skill in the art without making creative efforts fall within the protection scope of the invention.

An aspect of an example of the invention provides a method for controlling a speech recognition device. In some embodiments, the method for controlling a speech recognition device is applied to a hardware environment consisting of a terminal and a server. The server is connected with the terminal through a network, and is configured to provide services for the terminal or a client configured on the terminal. A database is configured on the server or independently of the server, and is configured to provide a data storage service for the server.

The network includes, but is not limited to, at least one of the following: a wired network and a wireless network. The wired network include,
but is not limited to, at least one of the following: a wide area network, a metropolitan area network, and a local area network. The wireless network includes, but is not limited to, at least one of the following: wireless fidelity (WIFI) and Bluetooth. The terminal is limited to a personal computer (PC), a mobile phone, a tablet computer, etc.

The method for controlling a speech recognition device according to the example of the invention is executed by the server, or by the terminal, or jointly by the server and the terminal. The method for controlling a speech recognition device according to the example of the invention is executed by the terminal or the client configured on the terminal.

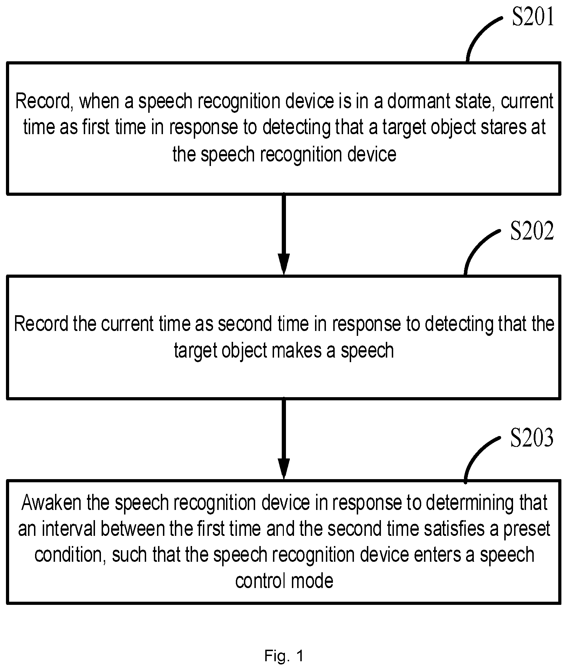

For instance, in a case that the method for controlling a speech recognition device according to the example is executed by the server, Fig. 1 is a schematic flow diagram of a method for controlling a speech recognition device according to an example of the invention. As shown in Fig. 1, the method includes the following steps:
S201, when the speech recognition device is in a dormant state, current time is recorded as first time in response to detecting that a target object stares at the speech recognition device.

In the example, the speech recognition device is a smart speaker, a television or another household appliance. Operation states of the speech recognition device include the dormant state and a working state. When the speech recognition device is in the dormant state, the speech recognition device is in the working state only after the speech recognition device is awakened. When the speech recognition device is in the working state, the speech recognition device does not need to be awakened, and directly receive a speech of a user and execute a corresponding control instruction according to the speech of the user.

According to communication habits between people, they often stare at each other when communicating with others. Accordingly, people generally keep the habit when communicating with a speech device. When a user transmits an instruction to an intelligent speech recognition device, the user also stares at the device, so the current time when the user stares at the speech recognition device needs to be recorded.

S202, the current time is recorded as second time in response to detecting that the target object makes a speech.

In the example, whether the target object makes the speech is detected by a speech detection module in the speech recognition device. Even if the speech recognition device is in the dormant state, whether the target object makes the speech is detected all the time by the speech detection module in the speech recognition device.

S203, the speech recognition device is awakened in response to determining that an interval between the first time and the second time satisfies a preset condition, such that the speech recognition device enters a speech control mode.

In the example, the speech control mode is the working state of the speech recognition device. In response to determining that the interval between the first time and the second time does not satisfy the preset condition, the speech recognition device awakens the speech recognition device according to whether a wakeup word exists in the speech made by the target object. In this way, assistance is provided for a determination method with an interval between staring time and time when the speech is made, occurrence of missed determination is avoided, and further accuracy of awakening the speech recognition device is improved.

In an example, after the speech recognition device is awakened, the method further includes the following steps: whether a preset target keyword exists in the speech is detected; and the speech recognition device is controlled to execute an operation corresponding to the preset target keyword in response to detecting that the preset target keyword exists in the speech, and the speech recognition device is controlled to be switched to the dormant state in response to detecting that the preset target keyword does not exist in the speech.

In the example, after the speech recognition device is awakened, the target keyword in the speech is detected by the speech detection module. If the target keyword exists in the speech, intelligent speech recognition is controlled according to a control instruction corresponding to the target keyword, such that the speech recognition device is accurately controlled. Control of the speech recognition device of the example is based on the awakening mode of the invention. A user does not need to firstly say the wakeup word to awaken the speech recognition device and then control the speech recognition device, and control the speech recognition device while staring at the speech recognition device. In this way, it is more convenient for the user to use the intelligent speech recognition device, and user experience is greatly improved.

In practical application, a keyword of the speech made by the target object is retrieved through any speech keyword retrieval technology. For instance, the keyword of the speech made by the target object is retrieved through a deep neural network. After the target keyword is retrieved, whether the speech is made to the speech recognition device needs to be determined according to a meaning of the speech made by the user. In this way, false recognition of the speech recognition device is avoided, accuracy of user control is improved, and further user experience is improved.

In an example, the step that the speech recognition device is awakened in response to determining that the interval between the first time and the second time satisfies the preset condition includes the following step: in response to determining that the interval is shorter than or equal to a first predetermined value, it is determined that the target object has an intention to control the speech recognition device, and the speech recognition device is awakened.

On the basis of a user habit in use of the speech recognition device, when a user has an intention to use the speech recognition device, the user generally makes a speech soon after staring at the speech recognition device. Therefore, in the example, in response to determining that the interval is shorter than or equal to the first predetermined value, it is considered that the user has an intention to control the speech recognition device, and the speech recognition device is awakened.

The first predetermined value is determined by collecting big data and experiments to determine duration from time the user starts to stare at the device to time the user no longer has an intention to say a word to communicate with the device when the user uses the speech recognition device. In this way, control accuracy is further improved.

Clearly, in practical application, whether the user has the intention to control the speech recognition device is determined according to the interval between start time when the user stares at the speech recognition device and the time when the speech is made, or other duration, such that determination accuracy is further improved. In an example, the step that the speech recognition device is awakened in response to determining that the interval between the first time and the second time satisfies the preset condition includes the following step: in response to detecting that speech duration corresponding to the speech is shorter than or equal to a third predetermined value, it is determined that the target object has an intention to control the speech recognition device in response to determining that the interval is shorter than or equal to a second predetermined value, and the speech recognition device is awakened.

The user is chatting with other people in a space while staring at the speech recognition device, which cause false wakeup. Therefore, in the example, when the interval is shorter than or equal to the second predetermined value, duration of the speech made by the target object needs to be measured. If the speech duration of the user is longer than the third predetermined value, it is considered that the user is chatting with other people and has no intention to control the speech recognition device. If the speech duration of the user is shorter than or equal to the third predetermined value, it is considered that the user has the intention to control the speech recognition device.

A method for determining the second predetermined value and the third predetermined value is consistent with a method for determining the first predetermined value. Big data and experiments are collected to determine duration from time the user starts to stare at the device to time the user no longer has the intention to say a word to communicate with the device when the user uses the speech recognition device and a length of a sentence after staring.

In a specific example, whether the user has the intention to control the speech recognition device is determined according to duration of staring at the speech recognition device by the user.

In an example, the method further includes the following steps: a monitoring function of the speech recognition device is enabled in response to detecting that the target object does not stare at the speech recognition device; whether a preset wakeup word exists in the speech is monitored in response to monitoring that the target object makes the speech; the speech recognition device is awakened in response to determining that the preset wakeup word exists in the speech; an audio clip in the speech except an audio clip corresponding to the preset wakeup word is used as a target speech; semantic analysis is conducted on the target speech, and whether a preset target keyword exists in the target speech is determined; and the speech recognition device is controlled to operate according to a control instruction corresponding to the target keyword in response to determining that the target keyword exists in the target speech, and the speech recognition device is controlled to be switched to the dormant state in response to determining that the target keyword does not exist in the target speech.

In the example, in response to detecting that the target object does not stare at the speech recognition device, a monitoring function of an intelligent speech device is enabled to monitor whether the wakeup word exists in the speech made by the user. If the wakeup word exists, the speech recognition device is awakened. In the example, no matter where the wakeup word is located in the speech (for instance, "turn on the air conditioner, Xiaoming" or "Xiaoming, turn on the air conditioner"), the speech recognition device is awakened. Then, speech analysis is conducted according to parts other than the wakeup word. The speech recognition device is controlled if the target keyword exists, such that convenience and practicability of the speech recognition device is improved.

In practical application, the monitoring function is not only available when the user does not stare at the speech recognition device, and enabled all the time during use of the speech recognition device. As long as a wakeup word exists in the speech made by the user, the speech recognition device is awakened regardless of whether an interval between staring time and speech making time satisfies a condition. For instance, according to the first time and the second time of the user, in response to analyzing that the user has no intention to control the speech recognition device, whether the wakeup word exists in the speech made by the user is monitored, such that the device is awakened. Alternatively, according to the first time and the second time of the user, in response to analyzing that the user has the intention to control the speech recognition device and monitoring that the wakeup word exists in the speech made by the user, such that the device is awakened.

In an example, the steps that semantic analysis is conducted on the target speech, and whether the preset target keyword exists in the target speech is determined include the following steps: the target speech is decoded through a speech recognition model, and a candidate word sequence is obtained, where the speech recognition model is configured to convert the target speech into text data; a word grid is generated according to the candidate word sequence, a backtracking path corresponding to the candidate word sequence, and a matched score corresponding to the candidate word sequence; a word spelling in the word grid is retrieved according to a spelling of the preset target keyword, and a retrieval result is obtained; and it is determined that the preset target keyword exists in the target speech in response to determining that the word spelling of the preset target keyword exists in the retrieval result.

In the example, the target speech is analyzed through decoding, and whether a keyword exists in the target speech is determined, such that a more accurate control result is obtained. Clearly, in practical application, semantic analysis is conducted on the target speech in other ways, such as a neural network mentioned in the above content. Those skilled in the art select a proper way according to an actual situation.

In an example, the speech recognition device is provided with an eyeball tracking device. The step that the current time is recorded as the first time in response to detecting that the target object stares at the speech recognition device includes the following steps: a fall point of light reflected by an eyeball of the target object on the eyeball tracking device is obtained in response to determining that the eyeball tracking device emits light; a line-of-sight center of the target object is determined according to the fall point, eyeball shape information of the target object and a distance from the target object to the eyeball tracking device; and in response to determining that the line-of-sight center of the target object is located in a spatial zone where the speech recognition device is located, it is determined that the target object stares at the speech recognition device, and the current time is recorded as the first time.

In response to determining that two speech recognition devices exists in the space and the two speech recognition devices are close to each other, eyeball tracking devices of the two devices both detect eyeballs of the user. If the user is considered to stare at the device only by detecting the eyeball of the user, the device that the user has no intention to control is awakened. Therefore, in the example, the line-of-sight center of the user needs to be determined firstly. If the line-of-sight center of the user is on the speech recognition device, it is determined that the user stares at the speech recognition device. In this way, accuracy of awakening the speech device is improved.

The eyeball tracking device is an infrared device or an image collection device, such as a camera. The eyeball shape information is collected when the user uses the speech recognition device for the first time.

The technical solution of the invention will be further described in detail below in conjunction with specific embodiments.

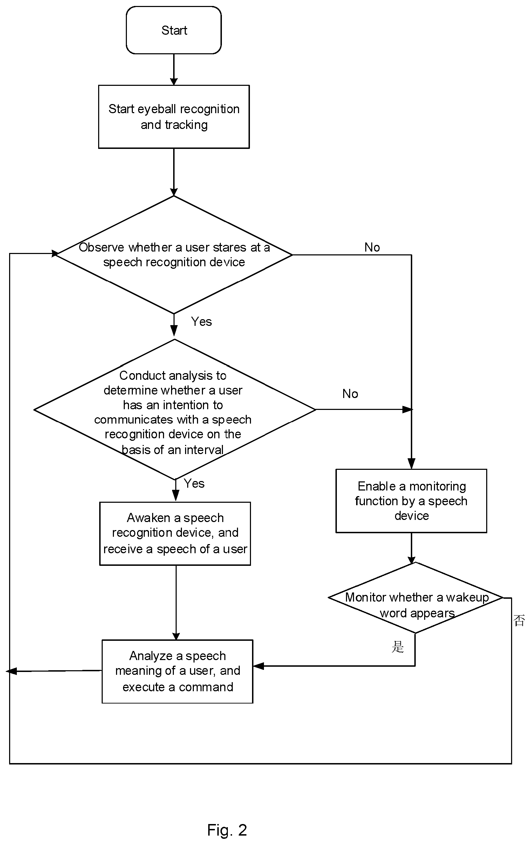

Fig. 2 is a schematic flow diagram of a method for controlling a speech recognition device according to an example of the invention. As shown in Fig. 2, the method includes the following steps:
Step 1, eyeball recognition and tracking is started: an eyeball of a user is tracked through an eyeball tracking device on the speech recognition device.
Step 2, whether the user stares at the speech recognition device is observed, if the user stares at the speech recognition device, current time is recorded as the first time, whether the user has an intention to communicate with the speech recognition device is analyzed, and if the user does not stare at the speech recognition device, a monitoring function is enabled.
Step 3, whether the user has a communication intention is determined according to an interval between the first time and the second time when the user makes a speech, if the interval is shorter than or equal to the first predetermined value, it is considered that the user has the communication intention, and if the interval is longer than the first predetermined value, the monitoring function is enabled.

When the user has the communication intention, the following steps are executed:
Step 4, when the user has the communication intention, a speech device is awakened, and a speech of a user is received.
Step 5, a meaning of the speech of the user is analyzed, and the speech recognition device is controlled to execute a corresponding instruction in response to determining that the target keyword exists in the speech of the user.

When the user has no communication intention or the user does not stare at the speech recognition device, the following steps are executed:
Step 6, when the monitoring function is enabled, whether a wakeup word appears in the speech of the user is monitored.
Step 7, a meaning of the speech except the wakeup word is analyzed, and the speech recognition device is controlled to execute a corresponding instruction in response to determining that a target keyword exists in the speech of the user.

According to the method for controlling a speech recognition device in all the examples, on the basis of the same inventive concept, the example further provides an apparatus for controlling a speech recognition device. The apparatus is configured to implement the examples and preferred embodiments, which will not be repeated herein. The term "module", as used below, achieves a combination of software and/or hardware having predetermined functions. While the apparatus described in the following examples is achieved in software, achievement of hardware, or a combination of software and hardware, is also possible and conceivable.

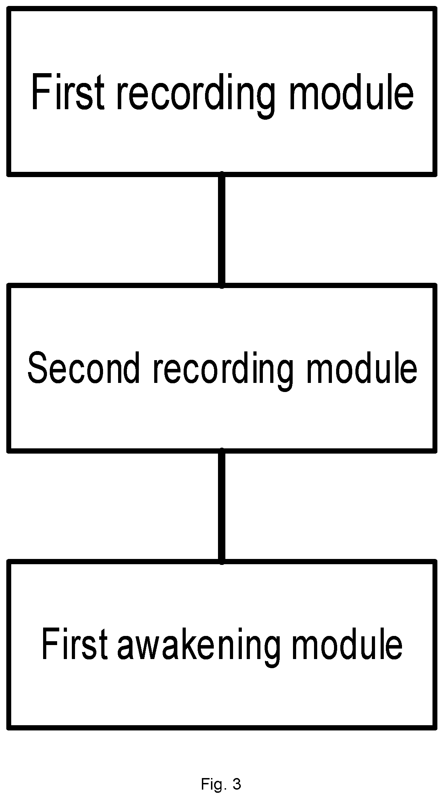

Fig. 3 is a schematic structural diagram of an apparatus for controlling a speech recognition device according to an example of the invention. As shown in Fig. 3, the apparatus includes:
a first recording module 10 configured to record, when the speech recognition device is in a dormant state, current time as first time in response to detecting that a target object stares at the speech recognition device;
a second recording module 20 configured to record the current time as second time in response to detecting that the target object makes a speech; and
a first awakening module 30 configured to awaken the speech recognition device in response to determining that an interval between the first time and the second time satisfies a preset condition, such that the speech recognition device enters a speech control mode.

In an example, the apparatus further includes a speech detection module and a first control module. The speech detection module is configured to detect, after awakening the speech recognition device, whether a preset target keyword exists in the speech through the speech detection module. The first control module is configured to control the speech recognition device to execute an operation corresponding to the target keyword in response to detecting that the target keyword exists in the speech, and control the speech recognition device to be switched to the dormant state in response to detecting that the target keyword does not exist in the speech.

In an example, the first awakening module 30 includes a first awakening sub-module. The first awakening sub-module is configured to determine, in response to determining that the interval is shorter than or equal to the first predetermined value, that the target object has an intention to control the speech recognition device, and awaken the speech recognition device.

In an example, the first awakening module 30 includes a second awakening sub-module. The second awakening sub-module is configured to determine, in response to detecting that speech duration corresponding to the speech is shorter than or equal to the third predetermined value, that the target object has an intention to control the speech recognition device in response to determining that the interval is shorter than or equal to a second predetermined value, and awaken the speech recognition device.

It should be noted that all the modules is implemented by software or hardware, implementation by hardware is implemented as follows, but are not limited thereto: the modules are located in a same processor; or the modules are separately located in different processors in any combination form.

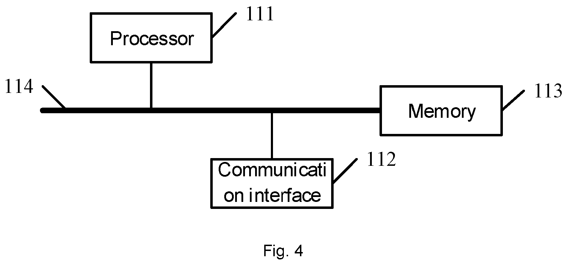

As shown in Fig. 4, an example of the invention provides an electronic device. The electronic device includes a processor 111, a communication interface 112, a memory 113, and a communication bus 114. The processor 111, the communication interface 112 and the memory 113 are in communication with one another through the communication bus 114.

The memory 113 is configured to store a computer program.

In an example of the invention, the processor 111 is configured to execute the computer program stored in the memory 113, so as to implement the method for controlling a speech recognition device according to any method example.

An example of the invention further provides a computer-readable storage medium, which stores a computer program. The computer program implements steps of the method for controlling a speech recognition device according to any method example when being executed by a processor.

It should be noted that relational terms herein such as "first" and "second" are only used to distinguish one entity or operation from another entity or operation without necessarily requiring or implying any actual such relation or order between such entities or operations. In addition, terms "include", "comprise", "involve", or any other variations thereof are intended to cover non-exclusive inclusions, such that a process, a method, an article, or a device including a series of elements not only includes those elements, but also includes other elements that are not explicitly listed, or also includes inherent elements of the process, the method, the article, or the device. Without more restrictions, the elements defined by the phrase "including a ..." or "comprising a ..." do not exclude the existence of other identical elements in the process, method, article, or device including the elements.

What are described above are only specific embodiments of the invention, such that those skilled in the art can understand or implement the invention. Various modifications to the examples are readily obvious to those skilled in the art. Therefore, the invention is not limited to the examples shown herein.

## Claims

1. A method for controlling a speech recognition device, comprising:
recording, when the speech recognition device is in a dormant state, current time as first time in response to detecting that a target object stares at the speech recognition device;
recording the current time as second time in response to detecting that the target object makes a speech; and
awakening the speech recognition device in response to determining that an interval between the first time and the second time satisfies a preset condition, such that the speech recognition device enters a speech control mode;
**characterized in that**: the awakening the speech recognition device in response to determining that an interval between the first time and the second time satisfies the preset condition comprises:
determining, in response to detecting that speech duration corresponding to the speech is shorter than or equal to a third predetermined value, that the target object has an intention to control the speech recognition device in response to determining that the interval is shorter than or equal to a second predetermined value, and awakening the speech recognition device.

2. The method as claimed in claim 1, wherein after the awakening the speech recognition device, the method further comprises:
detecting whether a preset target keyword exists in the speech; and
controlling the speech recognition device to execute an operation corresponding to the preset target keyword in response to detecting that the preset target keyword exists in the speech, and controlling the speech recognition device to be switched to the dormant state in response to detecting that the preset target keyword does not exist in the speech.

3. The method as claimed in claim 1, wherein the awakening the speech recognition device in response to determining that an interval between the first time and the second time satisfies a preset condition comprises:
determining, in response to determining that the interval is shorter than or equal to a first predetermined value, that the target object has an intention to control the speech recognition device, and awakening the speech recognition device.

4. The method as claimed in claim 1, further comprising:
enabling a monitoring function of the speech recognition device in response to detecting that the target object does not stare at the speech recognition device;
detecting whether a preset wakeup word exists in the speech in response to monitoring that the target object makes the speech;
awakening the speech recognition device in response to determining that the preset wakeup word exists in the speech;
using an audio clip in the speech except an audio clip corresponding to the preset wakeup word as a target speech, conducting semantic analysis on the target speech, and determining whether a preset target keyword exists in the target speech; and
controlling the speech recognition device to operate according to a control instruction corresponding to the target keyword in response to determining that the preset target keyword exists in the target speech, and controlling the speech recognition device to be switched to the dormant state in response to determining that the preset target keyword does not exist in the target speech.

5. The method as claimed in claim 4, wherein the conducting semantic analysis on the target speech, and determining whether the preset target keyword exists in the target speech comprise:
decoding the target speech through a speech recognition model, and obtaining a candidate word sequence, wherein the speech recognition model is configured to convert the target speech into text data;
generating a word grid according to the candidate word sequence, a backtracking path corresponding to the candidate word sequence, and a matched score corresponding to the candidate word sequence;
retrieving a word spelling in the word grid according to a spelling of the preset target keyword, and obtaining a retrieval result; and
determining that the preset target keyword exists in the target speech in response to determining that the word spelling of the preset target keyword exists in the retrieval result.

6. The method as claimed in claim 1, wherein the speech recognition device is provided with an eyeball tracking device, and the recording current time as the first time in response to detecting that the target object stares at the speech recognition device comprises:
obtaining a fall point of light reflected by an eyeball of the target object on the eyeball tracking device in response to determining that the eyeball tracking device emits light;
determining a line-of-sight center of the target object according to the fall point, eyeball shape information of the target object and a distance from the target object to the eyeball tracking device; and
determining, in response to determining that the line-of-sight center of the target object is located in a spatial zone where the speech recognition device is located, that the target object stares at the speech recognition device, and recording the current time as the first time.

7. An apparatus for controlling a speech recognition device, comprising:
a first recording module configured to record, when the speech recognition device is in a dormant state, current time as first time in response to detecting that a target object stares at the speech recognition device;
a second recording module configured to record the current time as second time in response to detecting that the target object makes a speech; and
a first awakening module configured to awaken the speech recognition device in response to determining that an interval between the first time and the second time satisfies a preset condition, such that the speech recognition device enters a speech control mode;
wherein the first awakening module comprises a second awakening sub-module, the second awakening sub-module is configured to determine, in response to detecting that speech duration corresponding to the speech is shorter than or equal to a third predetermined value, that the target object has an intention to control the speech recognition device in response to determining that the interval is shorter than or equal to a second predetermined value, and awaken the speech recognition device.

8. An electronic device, comprising a processor, a communication interface, a memory, and a communication bus, wherein the processor, the communication interface and the memory are in communication with one another through the communication bus;
the memory is configured to store a computer program; and
the processor is configured to execute the computer program stored in the memory, so as to implement the method for controlling a speech recognition device as claimed in any one of claims 1-6.

9. A computer-readable storage medium, storing a computer program, wherein the computer program implements the method for controlling a speech recognition device as claimed in any one of claims 1-7 when being executed by a processor.

10. The apparatus for controlling a speech recognition device as claimed in claim 7, wherein the apparatus for controlling a speech recognition device comprises:
a speech detection module, configured to detect after awakening the speech recognition device, whether a preset target keyword exists in the speech;
a first control module, configured to control the speech recognition device to execute an operation corresponding to a target keyword in response to detecting that the target keyword exists in the speech, and control the speech recognition device to be switched to the dormant state in response to detecting that the target keyword does not exist in the speech.

11. The apparatus for controlling a speech recognition device as claimed in claim 7, wherein
the first awakening module comprises a first awakening sub-module, the first awakening sub-module is configured to determine, in response to determining that the interval is shorter than or equal to a first predetermined value, that the target object has an intention to control the speech recognition device, and awaken the speech recognition device.

## Patentansprüche

1. Verfahren zum Steuern einer Spracherkennungsvorrichtung, umfassend:
Aufzeichnen, wenn sich die Spracherkennungsvorrichtung in einem Ruhezustand befindet, der aktuellen Zeit als ersten Zeitpunkt in Reaktion darauf, dass erkannt wird, dass ein Zielobjekt auf die Spracherkennungsvorrichtung starrt;
Aufzeichnen der aktuellen Zeit als zweiten Zeitpunkt in Reaktion darauf, dass erkannt wird, dass das Zielobjekt spricht; und
Wecken der Spracherkennungsvorrichtung in Reaktion darauf, dass festgestellt wird, dass ein Intervall zwischen dem ersten Zeitpunkt und dem zweiten Zeitpunkt einer voreingestellten Bedingung entspricht, sodass die Spracherkennungsvorrichtung in einen Sprachsteuerungsmodus eintritt;
**dadurch gekennzeichnet, dass** das Wecken der Spracherkennungsvorrichtung in Reaktion darauf, dass festgestellt wird, dass ein Intervall zwischen dem ersten Zeitpunkt und dem zweiten Zeitpunkt der voreingestellten Bedingung entspricht, umfasst:
Feststellen, in Reaktion darauf, dass erkannt wird, dass die Sprechdauer, die dem Sprechen entspricht, kürzer oder gleich einem dritten vorbestimmten Wert ist, dass das Zielobjekt die Absicht hat, die Spracherkennungsvorrichtung zu steuern, in Reaktion darauf, dass festgestellt wird, dass das Intervall kürzer oder gleich einem zweiten vorbestimmten Wert ist, und Wecken der Spracherkennungsvorrichtung.

2. Verfahren nach Anspruch 1, wobei das Verfahren nach dem Wecken der Spracherkennungsvorrichtung ferner umfasst:
Erkennen, ob ein voreingestelltes Zielschlüsselwort in der Sprache vorhanden ist; und
Steuern der Spracherkennungsvorrichtung, um in Reaktion darauf, dass erkannt wird, dass das voreingestellte Zielschlüsselwort in der Sprache vorhanden ist, eine dem voreingestellten Zielschlüsselwort entsprechende Operation auszuführen, und in Reaktion darauf, dass erkannt wird, dass das voreingestellte Zielschlüsselwort in der Sprache nicht vorhanden ist, Steuern der Spracherkennungsvorrichtung derart, dass diese in den Ruhezustand geschaltet wird.

3. Verfahren nach Anspruch 1, wobei das Wecken der Spracherkennungsvorrichtung in Reaktion darauf, dass festgestellt wird, dass ein Intervall zwischen dem ersten Zeitpunkt und dem zweiten Zeitpunkt eine voreingestellte Bedingung erfüllt, umfasst:
Feststellen, in Reaktion darauf, dass festgestellt wird, dass das Intervall kürzer oder gleich einem ersten vorbestimmten Wert ist, dass das Zielobjekt die Absicht hat, die Spracherkennungsvorrichtung zu steuern, und Wecken der Spracherkennungsvorrichtung.

4. Verfahren nach Anspruch 1, ferner umfassend:
Aktivieren einer Überwachungsfunktion der Spracherkennungsvorrichtung in Reaktion darauf, dass erkannt wird, dass das Zielobjekt nicht auf die Spracherkennungsvorrichtung starrt;
Erkennen, in Reaktion auf die Beobachtung, dass das Zielobjekt spricht, ob ein voreingestelltes Weckwort in der Sprache vorhanden ist;
Wecken der Spracherkennungsvorrichtung in Reaktion auf die Feststellung, dass das voreingestellte Weckwort in der Sprache vorhanden ist;
Verwenden eines Audioclips in der Sprache mit Ausnahme eines Audioclips, der dem voreingestellten Weckwort als Zielsprache entspricht, Durchführen einer semantischen Analyse der Zielsprache und Feststellen, ob ein voreingestelltes Zielschlüsselwort in der Zielsprache vorhanden ist; und
Steuern der Spracherkennungsvorrichtung, sodass diese in Reaktion auf die Feststellung, dass das voreingestellte Zielschlüsselwort in der Zielsprache vorhanden ist, gemäß einer dem Zielschlüsselwort entsprechenden Steuerungsanweisung arbeitet, und, in Reaktion auf die Feststellung, dass das voreingestellte Zielschlüsselwort in der Zielsprache nicht vorhanden ist, Steuern der Spracherkennungsvorrichtung derart, dass diese in den Ruhezustand geschaltet wird.

5. Verfahren nach Anspruch 4, wobei das Durchführen einer semantischen Analyse der Zielsprache und das Feststellen, ob das voreingestellte Zielschlüsselwort in der Zielsprache vorhanden ist, umfassen:
Decodieren der Zielsprache durch ein Spracherkennungsmodell und Erhalten einer Kandidatenwortsequenz, wobei das Spracherkennungsmodell dazu konfiguriert ist, die Zielsprache in Textdaten umzuwandeln;
Erzeugen eines Wortrasters gemäß der Kandidatenwortsequenz, eines der Kandidatenwortsequenz entsprechenden Rückverfolgungspfads und eines des Kandidatenwortsequenz entsprechenden Match-Wertes;
Abrufen einer Wortschreibweise im Wortraster gemäß einer Schreibweise des voreingestellten Zielschlüsselworts und Erhalten eines Abrufergebnisses; und
Feststellen, dass das voreingestellte Zielschlüsselwort in der Zielsprache vorhanden ist, in Reaktion darauf, dass festgestellt wird, dass die Wortschreibweise des voreingestellten Zielschlüsselworts im Abrufergebnis vorhanden ist.

6. Verfahren nach Anspruch 1, wobei die Spracherkennungsvorrichtung mit einer Augapfelverfolgungsvorrichtung versehen ist und das Erfassen der aktuellen Zeit als ersten Zeitpunkt in Reaktion darauf, dass erkannt wird, dass das Zielobjekt auf die Spracherkennungsvorrichtung starrt, umfasst:
Erhalten eines Auftreffpunkts von Licht, das von einem Augapfel des Zielobjekts auf der Augapfelverfolgungsvorrichtung reflektiert wird, in Reaktion auf die Feststellung, dass die Augapfelverfolgungsvorrichtung Licht emittiert;
Feststellen einer Sichtlinienmitte des Zielobjekts entsprechend dem Auftreffpunkt, Informationen zur Augapfelform des Zielobjekts und eines Abstands vom Zielobjekt zur Augapfelverfolgungsvorrichtung; und
Feststellen, in Reaktion auf die Feststellung, dass sich die Sichtlinienmitte des Zielobjekts in einer räumlichen Zone befindet, in der sich die Spracherkennungsvorrichtung befindet, dass das Zielobjekt länger auf die Spracherkennungsvorrichtung blickt, und Aufzeichnen der aktuellen Zeit als den ersten Zeitpunkt.

7. Einrichtung zum Steuern einer Spracherkennungsvorrichtung, umfassend:
ein erstes Aufzeichnungsmodul, dazu konfiguriert, dann, wenn sich die Spracherkennungsvorrichtung in einem Ruhezustand befindet, in Reaktion darauf, dass erkannt wird, dass ein Zielobjekt auf die Spracherkennungsvorrichtung starrt, die aktuelle Zeit als ersten Zeitpunkt zu erfassen;
ein zweites Aufzeichnungsmodul, dazu konfiguriert, in Reaktion auf die Feststellung, dass das Zielobjekt spricht, die aktuelle Zeit als zweiten Zeitpunkt zu erfassen; und
ein erstes Weckmodul, dazu konfiguriert, in Reaktion auf die Feststellung, dass ein Intervall zwischen dem ersten Zeitpunkt und dem zweiten Zeitpunkt einer voreingestellten Bedingung entspricht, sodass die Spracherkennungsvorrichtung in einen Sprachsteuerungsmodus eintritt, die Spracherkennungsvorrichtung zu wecken;
wobei das erste Weckmodul ein zweites Weck-Teilmodul umfasst, wobei das zweite Weck-Teilmodul dazu konfiguriert ist, in Reaktion auf das Erkennen, dass die der Sprache entsprechende Sprechdauer kürzer oder gleich einem dritten vorbestimmten Wert ist, in Reaktion auf die Feststellung, dass das Intervall kürzer oder gleich einem zweiten vorbestimmten Wert ist, festzustellen, dass das Zielobjekt die Absicht hat, die Spracherkennungsvorrichtung zu steuern, und die Spracherkennungsvorrichtung zu wecken.

8. Elektronische Vorrichtung, umfassend einen Prozessor, eine Kommunikationsschnittstelle, einen Speicher und einen Kommunikationsbus, wobei der Prozessor, die Kommunikationsschnittstelle und der Speicher über den Kommunikationsbus miteinander kommunizieren;
wobei der Speicher dazu konfiguriert ist, ein Computerprogramm zu speichern; und
wobei der Prozessor dazu konfiguriert ist, das im Speicher gespeicherte Computerprogramm auszuführen, um das Verfahren zur Steuerung einer Spracherkennungsvorrichtung nach einem der Ansprüche 1-6 umzusetzen.

9. Computerlesbares Speichermedium, das ein Computerprogramm speichert, wobei das Computerprogramm das Verfahren zum Steuern einer Spracherkennungsvorrichtung nach einem der Ansprüche 1-7 umsetzt, wenn es von einem Prozessor ausgeführt wird.

10. Einrichtung zum Steuern einer Spracherkennungsvorrichtung nach Anspruch 7, wobei die Einrichtung zum Steuern einer Spracherkennungsvorrichtung umfasst:
ein Sprachdetektionsmodul, dazu konfiguriert, nach dem Wecken der Spracherkennungsvorrichtung zu erkennen, ob ein voreingestelltes Zielschlüsselwort in der Sprache vorhanden ist;
ein erstes Steuerungsmodul, dazu konfiguriert, in Reaktion auf das Erkennen, dass das Zielschlüsselwort in der Sprache vorhanden ist, die Spracherkennungsvorrichtung so zu steuern, dass sie eine Operation ausführt, die einem Zielschlüsselwort entspricht, und in Reaktion auf das Erkennen, dass das Zielschlüsselwort in der Sprache nicht vorhanden ist, die Spracherkennungsvorrichtung so zu steuern, dass sie in den Ruhezustand geschaltet wird.

11. Einrichtung zum Steuern einer Spracherkennungsvorrichtung nach Anspruch 7, wobei
das erste Weckmodul ein erstes Aufwach-Teilmodul umfasst, wobei das erste Aufwach-Teilmodul dazu konfiguriert ist, in Reaktion auf die Feststellung, dass das Intervall kürzer oder gleich einem ersten vorbestimmten Wert ist, festzustellen, dass das Zielobjekt die Absicht hat, die Spracherkennungsvorrichtung zu steuern, und die Spracherkennungsvorrichtung zu wecken.

## Revendications

1. Procédé destiné à commander un dispositif de reconnaissance de discours, comprenant :
l'enregistrement, lorsque le dispositif de reconnaissance de discours est dans un état de veille, d'un temps en cours en tant que premier temps en réponse au fait de détecter qu'un objet cible regarde vers le dispositif de reconnaissance de discours ;
l'enregistrement du temps en cours en tant que deuxième temps en réponse au fait de détecter que l'objet cible fait un discours ; et
le fait de réveiller le dispositif de reconnaissance de discours en réponse au fait de déterminer qu'un intervalle entre le premier temps et le deuxième temps satisfait une condition préréglée, de sorte que le dispositif de reconnaissance de discours entre dans un mode de commande de discours ;
**caractérisé en ce que** : le fait de réveiller le dispositif de reconnaissance de discours en réponse au fait de déterminer qu'un intervalle entre le premier temps et le deuxième temps satisfait la condition préréglée comprend :
le fait de déterminer, en réponse au fait de détecter qu'une durée de discours correspondant au discours est inférieure ou égale à une troisième valeur prédéterminée, que l'objet cible a une intention de commander le dispositif de reconnaissance de discours en réponse au fait de déterminer que l'intervalle est inférieur ou égal à une deuxième valeur prédéterminée, et le fait de réveiller le dispositif de reconnaissance de discours.

2. Procédé selon la revendication 1, dans lequel après le fait de réveiller le dispositif de reconnaissance de discours, le procédé comprend en outre :
le fait de détecter si oui un non un mot-clé cible préréglé existe dans le discours ; et
la commande du dispositif de reconnaissance de discours pour qu'il exécute une opération correspondant au mot-clé cible préréglé en réponse au fait de détecter que le mot-clé cible préréglé existe dans le discours, et la commande du dispositif de reconnaissance de discours pour qu'il soit commuté vers l'état de veille en réponse au fait de détecter que le mot-clé cible préréglé n'existe pas dans le discours.

3. Procédé selon la revendication 1, dans lequel le fait de réveiller le dispositif de reconnaissance de discours en réponse au fait de déterminer qu'un intervalle entre le premier temps et le deuxième temps satisfait une condition préréglée comprend :
le fait de déterminer, en réponse au fait de déterminer que l'intervalle est inférieur ou égal à une première valeur prédéterminée, que l'objet cible a une intention de commander le dispositif de reconnaissance de discours, et le fait de réveiller le dispositif de reconnaissance de discours.

4. Procédé selon la revendication 1, comprenant en outre :
l'activation d'une fonction de pilotage du dispositif de reconnaissance de discours en réponse au fait de détecter que l'objet cible ne regarde pas vers le dispositif de reconnaissance de discours ;
le fait de détecter si oui un non un mot de réveil préréglé existe dans le discours en réponse au pilotage du fait que l'objet cible fait le discours ;
le fait de réveiller le dispositif de reconnaissance de discours en réponse au fait de déterminer que le mot de réveil préréglé existe dans le discours ;
à l'aide d'un clip audio dans le discours à l'exception d'un clip audio correspondant au mot de réveil préréglé en tant que discours cible, la conduite d'une analyse sémantique sur le discours cible, et le fait de déterminer si oui ou non un mot-clé cible préréglé existe dans le discours cible ; et
la commande du dispositif de reconnaissance de discours pour qu'il opère en fonction d'une instruction de commande correspondant au mot-clé cible en réponse au fait de déterminer que le mot-clé cible préréglé existe dans le discours cible, et la commande du dispositif de reconnaissance de discours pour qu'il soit commuté vers l'état de veille en réponse au fait de déterminer que le mot-clé cible préréglé n'existe pas dans le discours cible.

5. Procédé selon la revendication 4, dans lequel la conduite d'une analyse sémantique sur le discours cible et le fait de déterminer si oui ou non le mot-clé cible préréglé existe dans le discours cible comprennent :
le décodage du discours cible via un modèle de reconnaissance de discours et l'obtention d'une séquence de mots candidate, dans lequel le modèle de reconnaissance de discours est configuré pour convertir le discours cible en donnée textuelle ;
la production d'une grille de mots en fonction de la séquence de mots candidate, d'un chemin de retour arrière correspondant à la séquence de mots candidate et d'un score assorti correspondant à la séquence de mots candidate ;
la récupération d'une orthographe de mot dans la grille de mots en fonction d'une orthographe du mot-clé cible préréglé et l'obtention d'un résultat de récupération ; et
le fait de déterminer que le mot-clé cible préréglé existe dans le discours cible en réponse au fait de déterminer que l'orthographe de mot du mot-clé cible préréglé existe dans le résultat de récupération.

6. Procédé selon la revendication 1, dans lequel le dispositif de reconnaissance de discours est prévu avec un dispositif de suivi de globe oculaire, et l'enregistrement d'un temps en cours en tant que premier temps en réponse au fait de détecter que l'objet cible regarde vers le dispositif de reconnaissance de discours comprend :
l'obtention d'un point de chute de lumière réfléchi par un globe oculaire de l'objet cible sur le dispositif de suivi de globe oculaire en réponse au fait de déterminer que le dispositif de suivi de globe oculaire émet une lumière ;
la détermination d'un centre de ligne de visée de l'objet cible en fonction du point de chute, d'une information de forme de globe oculaire de l'objet cible et d'une distance de l'objet cible jusqu'au dispositif de suivi de globe oculaire ; et
le fait de déterminer, en réponse au fait de déterminer que le centre de ligne de visée de l'objet cible est situé dans une zone spatiale où le dispositif de reconnaissance de discours est situé, que l'objet cible regarde vers le dispositif de reconnaissance de discours, et l'enregistrement du temps en cours en tant que premier temps.

7. Appareil destiné à commander un dispositif de reconnaissance de discours, comprenant :
un premier module d'enregistrement configuré pour enregistrer, lorsque le dispositif de reconnaissance de discours est dans un état de veille, un temps en cours en tant que premier temps en réponse au fait de détecter qu'un objet cible regarde vers le dispositif de reconnaissance de discours ;
un deuxième module d'enregistrement configuré pour enregistrer le temps en cours en tant que deuxième temps en réponse au fait de détecter que l'objet cible fait un discours ; et
un premier module de réveil configuré pour réveiller le dispositif de reconnaissance de discours en réponse au fait de déterminer qu'un intervalle entre le premier temps et le deuxième temps satisfait une condition préréglée, de sorte que le dispositif de reconnaissance de discours entre dans un mode de commande de discours ;
dans lequel le premier module de réveil comprend un deuxième sous-module de réveil, le deuxième sous-module de réveil est configuré pour déterminer, en réponse au fait de détecter qu'une durée de discours correspondant au discours est inférieure ou égale à une troisième valeur prédéterminée, que l'objet cible a une intention de commander le dispositif de reconnaissance de discours en réponse au fait de déterminer que l'intervalle est inférieur ou égal à une deuxième valeur prédéterminée, et réveiller le dispositif de reconnaissance de discours.

8. Dispositif électronique, comprenant un processeur, une interface de communication, une mémoire et un bus de communication, dans lequel le processeur, l'interface de communication et la mémoire sont en communication les uns avec les autres via le bus de communication ;
la mémoire est configurée pour stocker un programme informatique ; et
le processeur est configuré pour exécuter le programme informatique stocké dans la mémoire, de manière à mettre en œuvre le procédé destiné à commander un dispositif de reconnaissance de discours selon l'une quelconque des revendications 1 à 6.

9. Support de stockage lisible par ordinateur, stockant un programme informatique, dans lequel le programme informatique met en œuvre le procédé destiné à commander un dispositif de reconnaissance de discours selon l'une quelconque des revendications 1 à 7 lorsqu'il est exécuté par un processeur.

10. Appareil destiné à commander un dispositif de reconnaissance de discours selon la revendication 7, dans lequel l'appareil destiné à commander un dispositif de reconnaissance de discours comprend :
un module de détection de discours, configuré pour détecter, après le réveil du dispositif de reconnaissance de discours, si oui ou non un mot-clé cible préréglé existe dans le discours ;
un premier module de commande configuré pour commander le dispositif de reconnaissance de discours pour qu'il exécute une opération correspondant à un mot-clé cible en réponse au fait de détecter que le mot-clé cible existe dans le discours, et commander le dispositif de reconnaissance de discours pour qu'il soit commuté vers l'état de veille en réponse au fait de détecter que le mot-clé cible n'existe pas dans le discours.

11. Appareil destiné à commander un dispositif de reconnaissance de discours selon la revendication 7, dans lequel
le premier module de réveil comprend un premier sous-module de réveil, le premier sous-module de réveil est configuré pour déterminer, en réponse au fait de déterminer que l'intervalle est inférieur ou égal à une première valeur prédéterminée, que l'objet cible a une intention de commander le dispositif de reconnaissance de discours, et réveiller le dispositif de reconnaissance de discours.
